# EUROPEAN PATENT SPECIFICATION

(11) **EP 2 570 017 B1**
(45) Date of publication and mention of the grant of the patent: **16.11.2016**
(21) Application number: 12178428.4
(22) Date of filing: 30.07.2012
(51) Int. Cl.: A01D 34/135, A01D 34/14

(54) **A mower device**
Mähvorrichtung
Dispositif de tonte

(30) Priority: 16.09.2011 IT RE20110070
(43) Date of publication of application: 20.03.2013
(73) Proprietor: Eurosystems S.p.A., 42045 Luzzara (Reggio Emilia) (IT)
(72) Inventor: Bovi, Fabio, 42045 Luzzara (Reggio Emilia) (IT)
(74) Representative: Corradini, Corrado

(56) References cited:
- EP-A1- 1 358 785
- DE-A1- 3 423 797
- FR-A- 1 148 843
- US-A- 2 535 878

## Description

The present invention relates to a mower device of a type that can be mounted on a mower or front-cutting motor mower.

As is known, every mower or motor mower is conventionally provided with a cutter device, commonly referred to as the cutter bar, which is mounted on the front or anterior part of the mower to do the grass cutting and trimming.

A cutting bar of known type comprises two horizontal cutter blades that are reciprocally superposed, each of which is formed by a support bar and a plurality of cutters projectingly fixed in succession along the longitudinal development of the support bar, such as to realise overall a sawtooth structure.

At least one of the cutter blades is activated to slide in contact on the other with an alternating movement in the longitudinal direction, such that the knives have a combined scissor-effect that enables the grass to be cut by shearing.

The alternating movement of this cutter blade is generally obtained by use of a motorized activating arm, which can oscillate by rotating about a vertical rotation axis, and by a kinematic transmission group suitable for transforming the oscillation of the activating arm into the alternating movement of the cutter blade.

### A mower device of this kind is disclosed in the French patent FR 1 148 843.

A drawback of this solution consists in the fact that the moving parts of the kinematic transmission group are fully exposed to the work environment of the cutter bar, so that they can get wet and/or dirty during use, increasing both wear and reciprocal friction and rapidly reducing the efficiency of the cutter bar.

An aim of an embodiment of the present invention is to obviate, or at least reduce, the above-mentioned drawback in the prior art by means of a simple, efficient and relatively inexpensive solution.

These aims are attained by the characteristics of the invention as it is set out in independent claim 1. The dependent claims outline preferred and/or particularly advantageous aspects of the invention.

In particular, the invention makes available a mower device comprising at least a cutter blade, an activating arm which can oscillate, rotating about a rotation axis, and transmission means suitable for transforming the oscillation of the activating arm into an alternating movement of the cutter blade in a perpendicular direction to the rotation axis, where the transmission means are contained internally of a protective casing fixed to the cutter blade.

Thanks to this solution, the transmission means are advantageously protected from the working environment of the mowing equipment, such that the moving parts thereof are not fouled and/or wet during use, resulting in a reduction in both wear and the friction forces of rubbing against each other, thus increasing the overall efficiency of the mower device.

In particular, the above-described transmission means include a mobile body, which is hinged to the activating arm such that it can rotate about an axis parallel to and distanced from the axis of rotation of the activating arm, and guide means solidly constrained to the cutter blade, which guide means are coupled to said mobile body such as to block the mobile body with respect to the movement direction of the cutting blade and enable it to slide in a predetermined sliding direction, the sliding direction being perpendicular to both the movement direction of the cutter blade and the rotation axis of the activating arm.

Thank to this solution, the invention delineates a particularly simple and reliable way for transforming the rotational movement of the activating arm into an alternating linear movement of the cutter blade.

According to an aspect of the invention, the protective casing comprises at least two reciprocally separable portions, for example an open shell and a cover to close the shell.

This aspect of the invention has the advantage of enabling assembly of the transmission means within the protective casing, as well as disassembly thereof for maintenance purposes.

In a further aspect of the invention, the protective casing contains a lubricant such as lubricating oil or, more preferably, lubricating grease.

This aspect of the invention has the advantage of reducing the friction between the moving parts of the means of transmission, increasing the efficiency of the mower.

In particular, in an aspect of the invention, the protective casing includes an input for the introduction of the lubricant to the inside; a greaser device can be applied there, for example a greasing nipple.

This solution has the advantage of enabling the filling and refilling of lubricant, without demounting the protective casing.

According to an aspect of the invention, the transmission means are defined by the protective casing.

In this way the number of components to be assembled is advantageously reduced.

In a further aspect of the invention, the mobile body is hinged to the activating arm by a connecting pin that projects from a slot in the protective casing.

In this way, it is advantageously possible to connect the activating arm to the mobile body without restricting the freedom of movement of the activating arm.

In a further aspect of the invention, the slot is closed by a mobile shutter, which affords a through hole in which the connecting pin is substantially snugly inserted.

With this solution, the slot of the protective casing is always closed, advantageously preventing entry of dirt or moisture as well as leakage of lubricant.

In an aspect of the invention, the connecting pin is fixed to the activating arm and is rotatably inserted into a receiving hole of the mobile body.

With this solution, the joint realised between the connecting pin and the receiving hole is also contained and protected internally of the protective casing.

To reduce the friction forces of the joint between the external surface of the connecting pin and the internal surface of the receiving hole, a bearing can be coaxially interposed, such as a bushing made of a material having a low coefficient of friction, either plastic (e.g. nylon) or metal (e.g. brass).

Further characteristics and advantages of the invention will emerge from a reading of the following description, which is provided by way of non-limiting example, with the aid of the figures of the accompanying drawings.

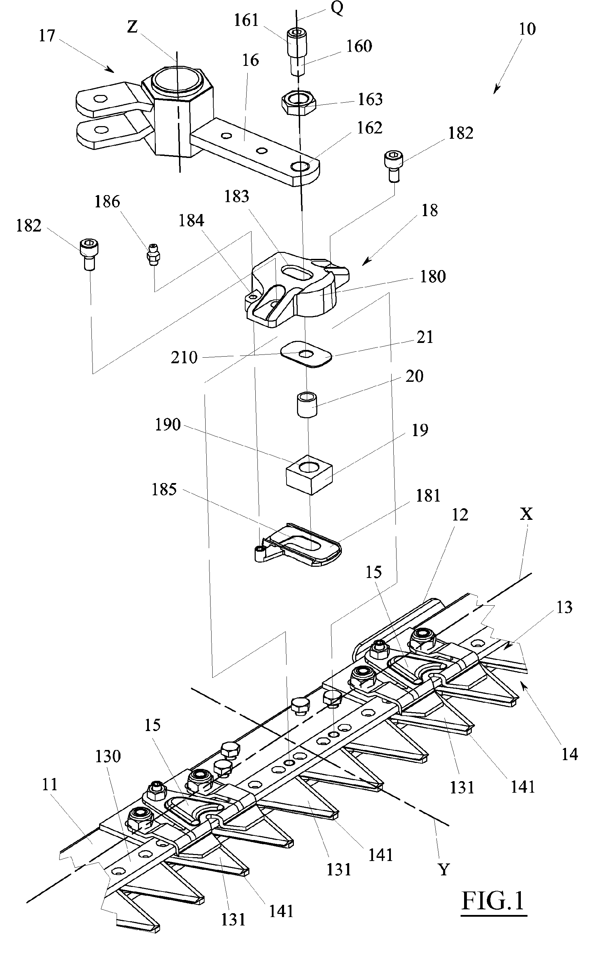

Figure 1 is an exploded view of a mower device according to an embodiment of the invention.
Figure 2 is a plan view of the mower device shown in figure 1, in a first operating configuration.
Figure 3 is the view of figure 2 in which the cutter device is shown in a second operating configuration.
Figure 4 is section IV-IV of figure 3 in an enlarged scale.
Figure 5 is section VV of figure 4 in an enlarged scale.

The figures illustrate a mower device 10, commonly called a cutter bar, which is suitable for being mounted in the front part of a lawn mower or motor-mower having a frontal mowing blade. However, the mower device 10 may instead be connected to mowers of different types, such as those designed to be towed or borne by an agricultural vehicle, and activated by a power take-off of the vehicle.

The cutter device 10 is conformed such as to exhibit a lie plane defined by a longitudinal axis X and a transversal axis Y.

In particular, the cutter device 10 comprises a support plate 11, which is arranged parallel to the lie plane X, Y and exhibits a larger dimension in the direction defined by the longitudinal axis X.

The support plate 11 is provided with a pair of brackets 12, by means of which the cutter device 10 is rigidly secured to a frame of the mower (not shown). When the cutter device 10 is fixed to the frame, the lie plane X, Y is substantially horizontal, with the transversal axis Y orientated in the advancement direction of the mower.

Two reciprocally-overlapping cutter blades are associated to the support plate 11, a mobile upper blade 13 and a fixed lower blade 14. The blades 13 and 14 are substantially parallel to the lie plane X, Y and exhibit a prevalent dimension in the direction of the longitudinal axis X.

In particular, the upper blade 13 comprises a support bar 130, which develops parallel to the longitudinal axis X, and a plurality of cutters 131, which are projecting fixed along the longitudinal development of the support bar 130, such as to give the upper blade 13 a sawtooth profile. The knives 131 are singly constituted by a trapezoidal plate orientated parallel to the lie plane X, Y of the mower device 10. The cutters 131 are fixed to the support bar 130 at the larger bases, in such a way that the inclined sides define the sawtooth profile. The inclined sides of each cutter 131 are provided with respective cutting edges.

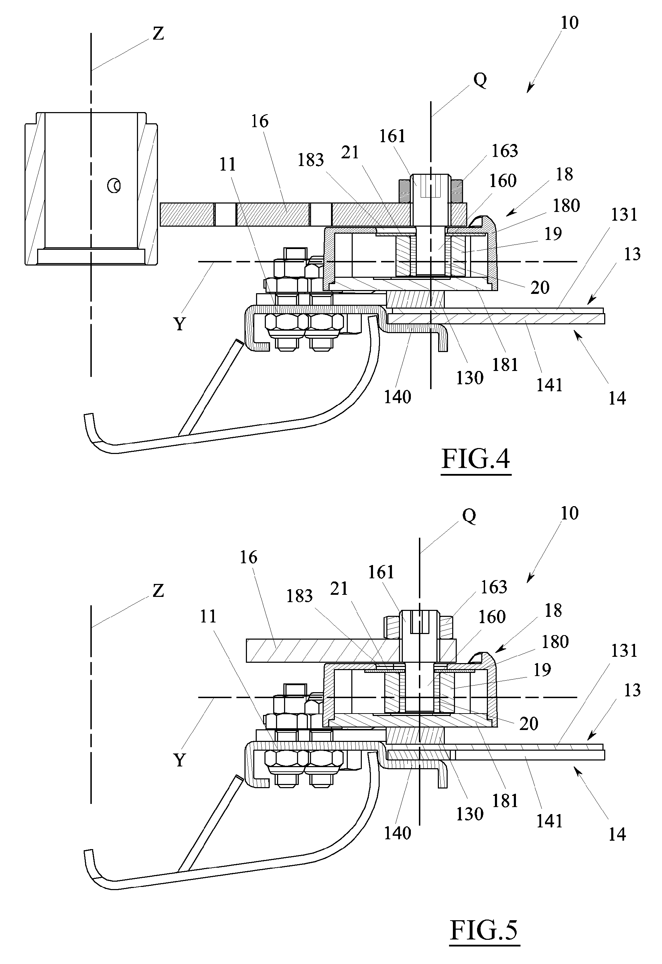

The lower blade 14 is entirely similar to the upper blade 13: it comprises a support bar 140 (see figures 4 and 5), which develops parallel to the longitudinal axis X, and a plurality of cutters 141, identical to those of upper blade 13, which are projectingly fixed along the longitudinal development of the support bar 140, such as to give the lower blade 14 a sawtooth profile. In the illustrated example, the support bar 140 is defined by a lowered portion of the plate support 11, which develops in the direction of the longitudinal axis X over the entire length of the support plate 11.

Attention is drawn to the fact that the cutters 131 of the upper blade 13 are fixed below the support bar 130, while the cutters 141 of the lower blade14 are fixed above the support bar 140, such as to be in direct contact with the cutters 131 of the upper blade 13.

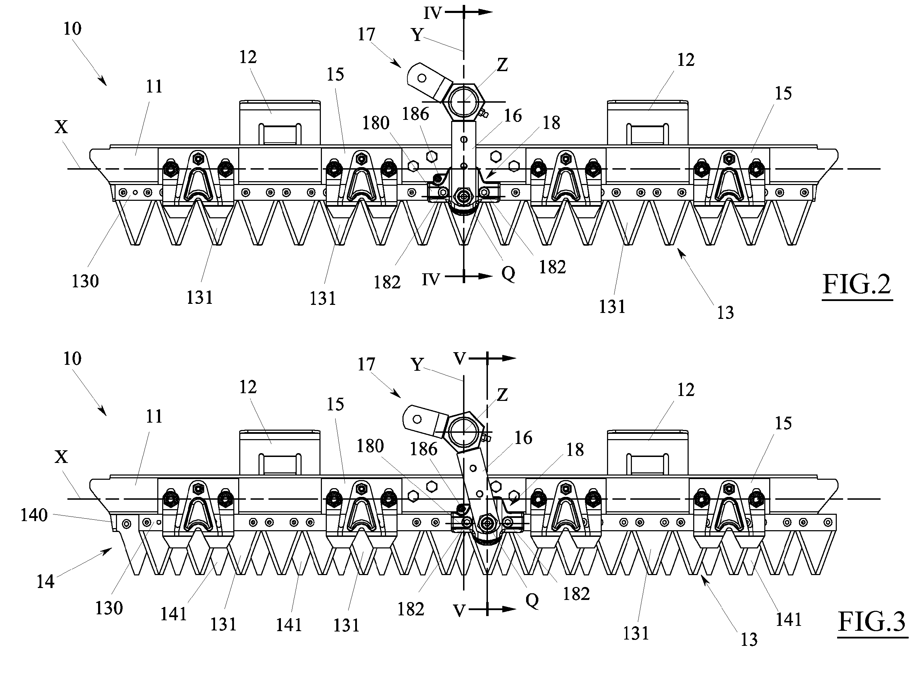

The upper blade 13 is connected to the support plate 11 by means of blocking and guide mean, denoted in their entirety by 15, which enable the upper blade 13 to slide on the lower blade 14 alternatingly in a parallel direction to the longitudinal axis X. In this way, the upper blade 13 can slide for example between the position shown in figure 2, where the cutters 131 are perfectly superposed on the cutters 141 of the lower blade 14, towards the position of figure 3, in which the cutters 131 are staggered with respect to the cutters 141 of the lower blade 14, and vice versa. This relative movement of the upper blade 13 with respect to the lower blade 14 enables the cutters 131 and 141 to produce a scissor effect, enabling the grass to be mowed.

The upper blade 13 is moved by an activating arm 16 which can oscillate by rotating about a fixed rotation axis Z, perpendicular to the lie plane X, Y of the mower device 10. The activating arm 16 is conformed as a thin plate and is arranged perpendicular to the rotation axis Z, i.e. parallel to the lie plane X, Y. In the illustrated example, the activating arm 16 is made available by a rocker, denoted in its entirety by 17, which is hinged to the frame of the mower at rotation axis Z and is oscillated by the engine of the mower via suitable transmission means, not shown as they are of known type.

The free end of the activating arm 16 bears a connecting pin 160, which projects downwards, developing along an axis Q that is parallel to and distant from the axis of rotation Z. In the illustrated example shown, the connecting pin 160 is defined by the smooth stem of a threaded grub screw 161, which is screwed into a threaded hole 162 afforded at an end of the activating arm 16, where it is blocked by a locknut 163. The activating arm 16 is connected by the connecting pin 160 to a device suitable for transforming the oscillating motion of the activating arm 16 into a alternating movement of the upper blade 13 in a parallel direction to the longitudinal axis X.

The device comprises a closed casing, denoted in its entirety by 18, which comprises an upper shell 180, having a concavity thereof facing downwards, and a lower cover 181 suitable for closing a bottom of the upper shell 180.

The lower cover 181 is joined to the upper shell 180 by jointing. The upper shell 180 is screwed to the support bar 130 of the upper blade 13 by a pair of screws 182, such that the casing 18 is stably fastened to the upper blade 13, with the lower casing 181 interposed between the support bar 130 and the upper shell 180. The upper shell 180 and the lower cover 181 may be made of a metal or a plastic material.

A mobile body 19 is slidingly housed internally of the casing 18. In the illustrated example the mobile body 19 is a sliding block. In particular, the upper shell 180 is shaped and dimensioned such as to constrain the mobile body 19 to be rested on the internal surface of the lower cover 181, blocking it bilaterally in a parallel direction to the rotation axis Z of the activating arm 16. The upper shell 180 is further conformed and dimensioned such as to bilaterally block the mobile body 19 in a parallel direction to the longitudinal axis X, while leaving it free to slide internally of the housing 18 in a parallel direction to the transversal axis Y. In this way, the casing 18 also serves as a guide for the mobile body 19. The mobile body 19 can be made of a metal or a plastic material.

The mobile body 19 exhibits a through hole 190 having a central axis that is parallel to the rotation axis Z of the activating arm 16. The through hole 190 faces the slot 183 afforded in the upper shell 180, which slot 183 has a prevalent dimension in the parallel direction to the transversal axis Y. The through hole 190 of the mobile body 19 is destined to receive the connecting pin 160 of the activating arm 16 through the slot 183, such that the mobile body 19 realises a joint together with the activating arm 16 that enables the mobile body 19 to oscillate by rotating about the axis Q of the connecting pin 160. Thus, when the activating arm 16 rotates about the rotation axis Z thereof, the mobile body 19 can push the upper blade 13 to slide with straight motion in the longitudinal direction X, by rotating around the connecting pin 160 and simultaneously sliding internally of the casing 18 (see figures 2-3 in comparison with figures 4-5).

In order to reduce friction forces at the joint between the activating arm 16 and the mobile body 19, the invention comprises a nylon anti-wear bushing 20, which is coaxially interposed between the internal surface of the through hole 190 and the external surface of the connecting pin 160. In other embodiments, the anti-wear bushing 20 can be made of a metal material such as brass, or be replaced with other types of bearings or revolving bodies.

In order to guarantee closure of the casing 18, the invention further comprises a shutter plate 21, which is interposed between the mobile body 19 and the top of the upper shell 180. The shutter plate 21 affords a central through-hole 210, which is suitable for aligning with the through hole 190 of the mobile body 19 and is dimensioned such as to substantially snugly receive the connecting pin 160. In this way, the shutter plate 21 is constrained to slide internally of the casing 18 solidly with the mobile body 19. The dimensions of the shutter plate 21 are greater than those of the slot 183, such that the shutter plate keeps the slot 183 closed for any relative position of the mobile body 19.

In an aspect of the invention, the closed casing 18 contains a lubricant, for example lubricating oil or preferably lubricating grease, which is suitable for reducing sliding friction of the mobile body 19. In this regard, the housing 18 comprises an inlet 184 for the lubricant, which is in communication with a lowering fashioned on the internal surface 185 of the lower cover 181 on which the mobile body 19 rests.

The lubricant can be introduced internally of the closed casing 18 through the inlet 184, or can be topped up should a part of the lubricant originally present have leaked out during use. In the illustrated example, a usual greasing device 186 is applied to the inlet 184, for example a greasing nipple, which can couple with corresponding injecting means of the lubricant.

Obviously a person skilled in the sector might make numerous modifications of a technical-applicational nature to the mower device described herein above, without its forsaking the ambit of the invention as claimed herein below.

## Claims

1. A mower device (10), comprising at least a cutter blade (13), an activating arm (16) suitable for oscillating by rotating about a rotation axis (Z), and transmission means (19) suitable for transforming the oscillation of the activating arm (16) into a rectilinear alternating motion of the cutter blade (13) in a direction (X) that is perpendicular to the rotation axis (Z), **characterised in that** the transmission means (19) are contained internally of a protective casing (18) fixed to the cutter blade (13) and comprise a mobile body (19), which is hinged to the activating arm (16) in such a way as to be able to rotate about an axis (Q) that is parallel to and distanced from the rotation axis (Z) of the activating arm (16), and guide means solidly constrained to the cutter blade (13), which guide means are coupled to the mobile body (19) such as to block the mobile body (13) with respect to the movement direction (X) of the cutter blade (13) and such as to enable the cutter blade (13) to slide in a predetermined sliding direction (Y), the sliding direction (Y) being perpendicular to both the movement direction (X) of the cutter blade (13) and the rotation axis (Z) of the activating arm (16).

2. The device (10) of claim 1, **characterised in that** the protective casing (18) comprises at least two reciprocally-separable portions (180, 181).

3. The device (10) of any one of the preceding claims, **characterised in that** the protective casing (18) contains a lubricant.

4. The device (10) of any one of the preceding claims, **characterised in that** the protective casing (18) comprises an inlet (184) for the lubricant.

5. The device (10) of any one of the preceding claims, **characterised in that** the guide means are defined by the protective casing (18).

6. The device (10) of any one of the preceding claims, **characterised in that** the mobile body (19) is hinged to the activating arm (16) by means of a connecting pin (160) which projects from a slot (183) of the protective casing (18).

7. The device (10) of claim 6, **characterised in that** the slot (183) is closed by a mobile shutter (21) provided with a through-hole (210) in which the connecting pin (160) is inserted substantially snugly.

8. The device (10) of claim 6 or 7, **characterised in that** the connecting pin (160) is fixed to the activating arm (16) and is rotatably inserted in a receiving hole (190) of the mobile body (19).

9. The device of claim 8, **characterised in that** a bearing (20) is coaxially interposed between the external surface of the connecting pin (160) and the internal surface of the receiving hole (190).

## Patentansprüche

1. Mähvorrichtung (10), mindestens eine Schneidklinge (13), einen Betätigungsarm (16), der zum Schwingen durch Drehen um eine Drehachse (Z) geeignet ist, und Übertragungsmittel (19) umfassend, die dafür geeignet sind, das Schwingen des Betätigungsarms (16) in eine geradlinige Wechselbewegung des Schneidmessers (13) in eine Richtung (X) umzuwandeln, die senkrecht zur Drehachse (Z) liegt, **dadurch gekennzeichnet, dass** die Übertragungsmittel (19) im Inneren eines Schutzgehäuses (18) enthalten sind, das an der Schneidklinge (13) befestigt ist, und einen beweglichen Körper (19) umfassen, der gelenkig derart am Betätigungsarm (16) angebracht ist, dass er in der Lage ist, sich um eine Achse (Q) zu drehen, die parallel zur Drehachse (Z) des Betätigungsarms (16) liegt und von dieser beabstandet ist, und Führungsmittel, die fest an der Schneidklinge (13) angebracht sind, wobei die Führungsmittel derart mit dem beweglichen Körper (19) gekoppelt sind, dass der mobile Körper (13) hinsichtlich der Bewegungsrichtung (X) der Schneidklinge (13) blockiert ist und dass das Gleiten der Schneidklinge (13) in eine festgelegte Gleitrichtung (Y) ermöglicht wird, wobei die Gleitrichtung (Y) senkrecht sowohl zur Bewegungsrichtung (X) der Schneidklinge (13) als auch zur Drehachse (Z) des Betätigungsarms (16) liegt.

2. Vorrichtung (10) nach Anspruch 1, **dadurch gekennzeichnet, dass** das Schutzgehäuse (18) mindestens zwei voneinander trennbare Abschnitte (180, 181) umfasst.

3. Vorrichtung (10) nach einem der vorhergehenden Ansprüche, **dadurch gekennzeichnet, dass** das Schutzgehäuse (18) ein Schmiermittel enthält.

4. Vorrichtung (10) nach einem der vorhergehenden Ansprüche, **dadurch gekennzeichnet, dass** das Schutzgehäuse (18) einen Einlass (184) für das Schmiermittel umfasst.

5. Vorrichtung (10) nach einem der vorhergehenden Ansprüche, **dadurch gekennzeichnet, dass** die Führungsmittel durch das Schutzgehäuse (18) definiert sind.

6. Vorrichtung (10) nach einem der vorhergehenden Ansprüche, **dadurch gekennzeichnet, dass** der bewegliche Körper (19) mittels eines Verbindungsstifts (160), der aus einem Schlitz (183) des Schutzgehäuses (18) hervorsteht, gelenkig am Betätigungsarm (16) angebracht ist.

7. Vorrichtung (10) nach Anspruch 6, **dadurch gekennzeichnet, dass** der Schlitz (183) mit einem beweglichen Verschluss (21) mit einer Durchgangsbohrung (210) verschlossen ist, in welche der Verbindungsstift (160) im Wesentlichen festsitzend eingesetzt ist.

8. Vorrichtung (10) nach Anspruch 6 oder 7, **dadurch gekennzeichnet, dass** der Verbindungsstift (160) am Betätigungsarm (16) befestigt und drehbar in eine Aufnahmeöffnung (190) des mobilen Körpers (19) eingesetzt ist

9. Vorrichtung (10) nach Anspruch 8, **dadurch gekennzeichnet, dass** zwischen der Außenfläche des Verbindungstifts (160) und der Innenfläche der Aufnahmeöffnung (190) koaxial ein Lager (20) eingefügt ist.

## Revendications

1. Dispositif de faucheuse (10) comprenant au moins une lame de coupe (13), un bras d'activation (16) adapté pour osciller par rotation autour d'un axe de rotation (Z), des moyens de transmission (19) adaptés pour transformer l'oscillation du bras d'activation (16) en un mouvement alternatif rectilinéaire de la lame de coupe (13) dans une direction (X) qui est perpendiculaire à l'axe de rotation (Z), **caractérisé en ce que** le moyen de transmission (19) est contenu à l'intérieur d'un boîtier de protection (18) fixé à la lame de coupe (13) et comprend un corps mobile (19) qui est articulé au bras d'activation (16) de manière à être capable de tourner autour d'un axe (Q) qui est parallèle à, et espacé de, l'axe de rotation (Z) du bras d'activation (16), et un moyen de guidage fermement appliqué à la lame de coupe (13), ledit moyen de guidage étant couplé au corps mobile (19) de manière à bloquer le corps mobile (13) par rapport à la direction de mouvement (X) de la lame de coupe (13) et de manière à permettre à la lame de coupe (13) de glisser dans une direction de glissement prédéterminée (Y), la direction de glissement (Y) étant perpendiculaire aussi bien à la direction de mouvement (X) de la lame de coupe (13) qu'à l'axe de rotation (Z) du bras d'activation (16).

2. Dispositif (10) selon la revendication 1, **caractérisé en ce que** le boîtier de protection (18) comprend au moins deux portions réciproquement séparables (180, 181).

3. Dispositif (10) selon l'une quelconque des revendications précédentes, **caractérisé en ce que** le boîtier de protection (18) contient un lubrifiant.

4. Dispositif (10) selon l'une quelconque des revendications précédentes, **caractérisé en ce que** le boîtier de protection (18) comprend une entrée (184) pour le lubrifiant.

5. Dispositif (10) selon l'une quelconque des revendications précédentes, **caractérisé en ce que** le moyen de guidage est défini par le boîtier de protection (18).

6. Dispositif (10) selon l'une quelconque des revendications précédentes, **caractérisé en ce que** le corps mobile (19) est articulé au bras d'activation (16) à l'aide d'une broche de connexion (160) qui ressort d'une rainure (183) du boîtier de protection (18).

7. Dispositif (10) selon la revendication 6, **caractérisé en ce que** la rainure (183) est fermée par un obturateur mobile (21) pourvu d'un trou traversant (210) dans lequel la broche de connexion (160) est insérée de manière substantiellement bien ajustée.

8. Dispositif (10) selon la revendication 6 ou 7, **caractérisé en ce que** la broche de connexion (160) est fixée au bras d'activation (16) et est insérée de manière rotative dans un trou de réception (190) du corps mobile (19).

9. Dispositif selon la revendication 8, **caractérisé en ce qu'**un palier (20) est interposé coaxialement entre la surface externe de la broche de connexion (160) et la surface interne du trou de réception (190).
